# EUROPÄISCHE PATENTSCHRIFT

(11) **EP 3 629 116 B1**
(45) Veröffentlichungstag und Bekanntmachung des Hinweises auf die Patenterteilung: **05.05.2021**
(21) Anmeldenummer: 19195711.7
(22) Anmeldetag: 05.09.2019
(51) Int. Cl.: G05B 19/401

(54) **VERFAHREN UND VORRICHTUNG FÜR EINE VERSCHLEISSANALYSE AN EINER WERKZEUGMASCHINE**
METHOD AND DEVICE FOR A WEAR ANALYSIS ON A MACHINE TOOL
PROCÉDÉ ET DISPOSITIF D'ANALYSE DE L'USURE SUR UNE MACHINE-OUTIL

(30) Priorität: 17.09.2018 DE 102018122759
(43) Veröffentlichungstag der Anmeldung: 01.04.2020
(73) Patentinhaber: CHIRON Group SE, 78532 Tuttlingen (DE)
(72) Erfinder: Schröder, Pascal, 78570 Mühlheim an der Donau (DE); Eppler, Claus, 72469 Meßstetten (DE)
(74) Vertreter: Witte, Weller & Partner Patentanwälte mbB

(56) Entgegenhaltungen:
- EP-A1- 2 924 526
- KNAPP W: "KREISFORMTEST IN DER PRAKTISCHEN ANWENDUNG AUF NC-WERKZEUGMASCHINEN", TECHNISCHE RUNDSCHAU, HALLWAG, BERN; CH, DE, Bd. 80, Nr. 46, 11. November 1988 (1988-11-11), Seite 20, XP000037180, ISSN: 1023-0823

## Beschreibung

Die vorliegende Erfindung betrifft ein Verfahren zur Steuerung einer Werkzeugmaschine mit mehreren Arbeitsachsen, die für eine Verlagerung eines Arbeitskopfs und/oder eines Werkstücks ausgebildet sind. Die vorliegende Erfindung betrifft außerdem eine entsprechende Vorrichtung zur Steuerung einer Werkzeugmaschine.

Mit einer Werkzeugmaschine lassen sich Werkstücke hochpräzise bearbeiten. Es ist jedoch bekannt, dass die Bearbeitungsgenauigkeit einer Werkzeugmaschine im Laufe der Zeit nachlässt. Es können daher Zyklen festgelegt werden, in denen die beweglichen Teile einer Werkzeugmaschine ausgetauscht werden. Alternativ oder zusätzlich hierzu besteht die Möglichkeit, mittels Stichproben der gefertigten Werkstücke zu überprüfen, ob die Werkstücke noch innerhalb der vorgegebenen Toleranzen gefertigt werden. Ist dies nicht mehr der Fall, werden die verschleißbehafteten Bauteile einer Werkzeugmaschine ausgetauscht.

EP 2 924 526 A1 beschreibt ein Verfahren zur Einrichtung und/oder Überwachung von Betriebsparametern einer Werkstückbearbeitungsmaschine.

Der Artikel von W. Knapp, "Kreisformtest in der praktischen Anwendung auf NC-Werkzeugmaschinen", Technische Rundschau, Hallwag, Bern, Bd. 80, Nr. 46, Seite 20, beschreibt, dass der Kreisformtest ein nützliches Hilfsmittel für Forschung und Entwicklung geworden ist und um die wesentlichen Abweichungen bei NC-Werkzeugmaschinen zu erkennen.

Es ist eine Aufgabe der vorliegenden Erfindung, ein verbessertes Verfahren und eine entsprechende Vorrichtung aufzuzeigen, um den Verschleiß an der Werkzeugmaschine festzustellen.

Die Aufgabe wird gelöst durch ein Verfahren nach Anspruch 1.

Im Rahmen der Erfindung haben die Erfinder erkannt, dass es im Stand der Technik zwar möglich ist festzustellen, ob eine Werkzeugmaschine einen vorgegebenen Toleranzbereich verlassen hat, dass zur Wiederherstellung der gewünschten Toleranzen aber eine Vielzahl von Teilen der Werkzeugmaschine getauscht werden müssen. Stattdessen haben die Erfinder nach einer Möglichkeit gesucht, wie man einen festgestellten Verschleiß, der sich bspw. durch Verlassen eines definierten Toleranzbereichs zeigt, gezielt einer Gruppe von Bauteilen oder sogar genau einem Bauteil der Werkzeugmaschine zuordnen kann.

Diese Möglichkeit eröffnet das zuvor beschriebene Verfahren. Es ermöglicht einerseits zu erkennen, welche Art von Verschleiß an einer oder mehreren Arbeitsachsen gegeben ist, die für eine Verlagerung des Arbeitskops und/oder des Werkstücks ausgebildet sind. Andererseits besteht die Möglichkeit, die Bauteile, die für die Art des Verschleißes in Frage kommen, einzugrenzen. So kann bspw. eine Gruppe von Bauteilen aus allen verschleißbehafteten Bauteilen identifiziert werden oder sogar ein konkretes Bauteil identifiziert werden.

Diese Informationen können es einerseits ermöglichen, die Ursache für den Verschleiß zu erkennen und über geeignete Gegenmaßnahmen, wie z.B. eine Änderung in dem Programm, das die Werkzeugmaschine ansteuert, zu ergreifen. Andererseits ist es nicht mehr erforderlich, alle verschleißbehafteten Teile auszutauschen, sondern lediglich eine Teilgruppe der verschleißbehafteten Bauteile oder sogar lediglich ein konkretes Bauteil. Diese Erkenntnisse ermöglichen es, die Betriebskosten der Werkzeugmaschine zu reduzieren oder einen längeren Betrieb der Werkzeugmaschine innerhalb des vorgegebenen Toleranzbereichs zu ermöglichen.

Gemäß der vorgeschlagenen Lösung, sind in einem Datenspeicher eine Vielzahl von Datentupeln gespeichert. Der Begriff Datentupel soll dabei die Zusammengehörigkeit von zwei oder mehr Daten beschreiben. Konkret weisen die Datentupel für mindestens eine spezifische Arbeitsachse der mehreren Arbeitsachsen einen Positionswert auf, insbesondere einen linearen Positionswert oder einen Winkelpositionswert bezogen auf die spezifische Arbeitsachse, d.h., bei einem linearen Positionswert entlang der spezifischen Arbeitsachse und bei einem Winkelpositionswert um die spezifische Arbeitsachse, dem zumindest ein Belastungswert zugeordnet ist, der in dem Datentupel enthalten ist.

Die Belastungswerte der Datentupel können dabei entweder empirisch erfasst worden sein, rechnerisch ermittelt worden sein, bspw. durch eine Simulation oder durch eine Analyse des Steuerprogramms, oder auch geschätzt worden sein. Selbstverständlich können die Belastungswerte auch unter Hinzuziehung mehrerer Aspekte ermittelt werden. Lediglich beispielhaft sei darauf hingewiesen, dass in aller Regel einer Position, an der sich ein Spindelkopf der Werkzeugmaschine häufig befindet, einen höheren Belastungswert aufweisen wird als eine Position, an der der Spindelkopf nur selten ist. Als weiteres Beispiel wird eine Position, die von dem Spindelkopf mit hoher Geschwindigkeit durchfahren wird, häufig einen höheren Belastungswert aufweisen als eine Position, die stets mit geringer Geschwindigkeit durchfahren wird.

Es werden aus dieser Vielzahl von Datentupel dann zwei Datentupel ausgewählt, deren zugeordnete Positionswerte verschieden voneinander sind. Bei einigen Ausgestaltungen werden die Positionswerte so ausgewählt, dass der erste Belastungswert verschieden vom zweiten Belastungswert ist. Mit anderen Worten werden zwei Positionen entlang der mindestens einen spezifischen Arbeitsachse ausgewählt, deren Belastungswerte verschieden sind.

In einem weiteren Schritt wird nun ein Steuerbefehl für die Werkzeugmaschine erzeugt. Dieser Steuerbefehl bewirkt, dass eine erste Toleranzmessung an einer ersten Position beschrieben durch den ersten Positionswert aus dem ersten Datentupel vorgenommen wird und eine zweite Toleranzmessung an einer zweiten Position beschrieben durch den zweiten Positionswert aus dem zweiten Datentupel vorgenommen wird. Mit anderen Worten, es werden an zwei Positionen Toleranzmessungen vorgenommen, wobei sich bei einigen Ausgestaltungen die Belastungswerte, die diesen Positionen zugeordnet sind, voneinander unterscheiden.

Jede der Toleranzmessungen ermittelt innerhalb welches Bereichs eine Abweichung zwischen einer vorgegebenen Sollposition von einer tatsächlichen Istposition abweicht. Je größer die Abweichung ist, desto größer ist die Toleranz. Bei der Herstellung muss also beachtet werden, dass der gemessene Toleranzbereich nicht die maximal erlaubten Toleranzen überschreitet. Je größer die ermittelte Toleranz ist, desto eher ist von einem durch Verschleiß hervorgerufenen Problem auszugehen.

Auf Basis der Ergebnisse der Toleranzmessungen wird dann eine Information über einen Verschleiß mindestens eines Teils der Werkzeugmaschine ausgegeben. Dadurch, dass die Toleranzmessungen an zwei Positionen durchgeführt werden, denen bekanntermaßen verschiedene Belastungswerte zugeordnet sind, ergibt sich die Möglichkeit anhand dieser Information eine bestimmte Gruppe von Bauteilen oder sogar genau ein Bauteil zu ermitteln, über die bzw. über das eine Aussage hinsichtlich des Verschleißes getroffen werden kann.

Das Verfahren kann in der Werkzeugmaschine selbst oder außerhalb der Werkzeugmaschine durchgeführt werden.

Damit ist die Aufgabe vollständig gelöst.

Bei einer bevorzugten Ausgestaltung wird bei einer ungefähren Übereinstimmung von erstem und zweitem Ergebnis die Information ausgegeben, dass ein Verschleiß an einem ersten Bauteil stattgefunden hat, das der spezifischen Arbeitsachse zugeordnet ist und relativ zu der spezifischen Arbeitsachse bewegbar ist.

Dabei wird angenommen, dass, wenn die Ergebnisse bzgl. der Toleranzen oder bzgl. des ermittelten Verschleißes an zwei Positionen der Arbeitsachse zumindest ungefähr gleich sind, nicht von einem entlang der Arbeitsachse lokal ausgeprägtem Verschleiß auszugehen ist, sondern von Verschleiß an einem Bauteil, das entlang der spezifischen Arbeitsachse bewegbar ist, wie z.B. einem Arbeitskopf oder einem Spindelkopf. Bei einigen Ausgestaltungen wird die ungefähre Übereinstimmung von ersten und dem zweiten Ergebnis angenommen, wenn der Unterschied zwischen dem ersten und dem zweiten Ergebnis weniger als 15 %, weniger als 10 %, weniger als 5 % oder weniger als 3 % beträgt.

Bei einer weiteren bevorzugten Ausgestaltung wird bei einer signifikanten Abweichung zwischen erstem und zweitem Ergebnis die Information ausgegeben, dass ein Verschleiß an einem zweiten Bauteil stattgefunden hat, das der spezifischen Arbeitsachse zugeordnet ist und ortsinvariant relativ zu der spezifischen Arbeitsachse ist.

Dabei wird angenommen, dass, wenn die Ergebnisse bzgl. der Toleranzen oder bzgl. des ermittelten Verschleißes an zwei Positionen der Arbeitsachse signifikant von einander abweichen, von einem entlang der Arbeitsachse lokal ausgeprägtem Verschleiß auszugehen ist, wie z.B. an einer bestimmten Position der Spindel. Dieses Bauteil kann also beispielsweise die Spindel sein, der die spezifische Arbeitsachse zugeordnet ist. Diese Position wird in der Regel dort vorliegen, wo der größere Toleranzbereich gemessen wurde. Bei einigen Ausgestaltungen wird die signifikante Abweichung von erstem und zweitem Ergebnis angenommen, wenn der Unterschied zwischen dem ersten und dem zweiten Ergebnis größer als 5 %, größer als 10 %, größer als 15 % oder größer als 20 % ist.

Bei einer weiteren bevorzugten Ausgestaltung werden das erste und das zweite Datentupel so ausgewählt, dass der erste Belastungswert deutlich kleiner als der zweite Belastungswert ist.

Es wird derzeit davon ausgegangen, dass die Genauigkeit einer Aussage hinsichtlich des Verschleißes an dem mindestens einen Teil der Werkzeugmaschine und/oder die Eingrenzung auf eine Gruppe von Bauteilen oder ein konkretes Bauteil gut durchgeführt werden kann, wenn sich die Belastungswerte deutlich voneinander unterscheiden. So kann bei verschiedenen Ausführungsformen das erste und zweite Datentupel so ausgewählt werden, dass der erste Belastungswert im Vergleich zum zweiten Belastungswert mindestens 10 %, mindestens 25 %, mindestens 50 % oder mindestens 75 % kleiner ist.

Bei einer weiteren bevorzugten Ausgestaltung werden das erste und das zweite Datentupel so ausgewählt, dass der erste Belastungswert ein kleinster Belastungswert aus der Vielzahl von Datentupeln der spezifischen Arbeitsachse ist und/oder der zweite Belastungswert ein größter Belastungswert aus der Vielzahl von Datentupeln der spezifischen Arbeitsachse ist.

Auf diese Weise kann der Unterschied zwischen dem ersten und dem zweiten Belastungswert besonders groß gewählt werden, wodurch eine besonders gute Aussage über den Verschleiß des Teils der Werkzeugmaschine möglich sein sollte.

Bei einer weiteren bevorzugten Ausgestaltung wird ein erstes Ergebnis der ersten Toleranzmessung mit einem ersten früheren Ergebnis einer dritten Toleranzmessung an einer dritten Position, die mit der ersten Position übereinstimmt oder zur ersten Position naheliegt, verglichen, um eine erste Differenz zu erhalten, und wird ein zweites Ergebnis der zweiten Toleranzmessung mit einem zweiten früheren Ergebnis einer vierten Toleranzmessung an einer vierten Position, die mit der zweiten Position übereinstimmt oder zur zweiten Position naheliegt, verglichen, um eine zweite Differenz zu erhalten.

Diese Ausgestaltung verbessert die Informationsgewinnung, da nun zusätzlich bereits früher ermittelte Werte berücksichtigt werden können. So erlaubt diese Ausgestaltung es nun, eine zeitliche Entwicklung bezüglich der gemessenen Toleranzen zu erkennen. Um einen aussagekräftigen Vergleich zu haben, wird daher die dritte Position für den Vergleich so gewählt, dass sie mit der ersten Position übereinstimmt oder zur ersten Position naheliegt. Dabei bedeutet die Wortwahl "naheliegt", dass der Fachmann eine sinnvolle Vergleichbarkeit zwischen der dritten Toleranzmessung an der dritten Position und der ersten Toleranzmessung an der ersten Position erkennt, auch wenn die beiden Positionen nicht identisch sind. In gleicher Weise wird die vierte Position so gewählt, dass sie mit der zweiten Position übereinstimmt oder zur zweiten Position naheliegt. Durch die Auswertungen der Differenzen kann man erkennen, wie sich die Toleranzmessung an der ersten Position im Verhältnis zu der Toleranzmessung an der zweiten Position verändert hat.

Bei einer weiteren bevorzugten Ausgestaltung wird bei einer ungefähren Übereinstimmung von erster und zweiter Differenz die Information ausgegeben, dass ein Verschleiß an einem ersten Bauteil stattgefunden hat, das der spezifischen Arbeitsachse zugeordnet ist und entlang der spezifischen Arbeitsachse bewegbar ist.

Die Überlegung hinter dieser Schlussfolgerung ist, dass bei einer zumindest im Wesentlichen gleichmäßigen Änderung an zwei Stellen der Arbeitsachse nicht von einem entlang der Arbeitsachse lokal ausgeprägtem Verschleiß auszugehen ist, sondern an einem Bauteil, das entlang der spezifischen Arbeitsachse bewegbar ist, wie z.B. einem Spindelkopf,. Es können dann Bauteile als Ursache für den Verschleiß ausgeschlossen oder nachrangig betrachtet werden, die ortsinvariant bezogen auf die spezifische Arbeitsachse sind. Hierzu kann dabei auch die spezifische Arbeitsachse selbst zählen. Bei einigen Ausgestaltungen wird die ungefähre Übereinstimmung von erster und zweiter Differenz angenommen, wenn der Unterschied zwischen der ersten und der zweiten Differenz weniger als 15 %, weniger als 10 %, weniger als 5 % oder weniger als 3 % beträgt.

Bei einer weiteren bevorzugten Ausgestaltung wird bei einer signifikanten Abweichung von erster und zweiter Differenz die Information ausgegeben, dass ein Verschleiß an einem zweiten Bauteil stattgefunden hat, das der spezifischen Arbeitsachse zugeordnet ist und ortsinvariant bezogen auf die spezifische Arbeitsachse ist.

Die Überlegung hinter dieser Schlussfolgerung ist, dass bei einer signifikant unterschiedlichen Änderung an zwei Stellen der Arbeitsachse von einem entlang der Arbeitsachse lokal ausgeprägtem Verschleiß auszugehen ist, also nicht an einem Bauteil, das entlang der spezifischen Arbeitsachse bewegbar ist, wie z.B. einem Spindelkopf,. Es können dann Bauteile als Ursache für den Verschleiß ausgeschlossen oder nachrangig betrachtet werden, die sich relativ zu der spezifischen Arbeitsachse verlagern. Hierzu kann dabei insbesondere der Arbeitskopf zählen. Bei einigen Ausgestaltungen wird die signifikante Abweichung von erster und zweiter Differenz angenommen, wenn der Unterschied zwischen der ersten und der zweiten Differenz größer als 5 %, größer als 10 %, größer als 15 % oder größer als 20 % ist.

Bei einer weiteren vorteilhaften Ausgestaltung wird die maximale Differenz von erster Differenz und zweiter Differenz ermittelt und der der maximalen Differenz zugeordnete Positionswert wird als dritte Information ausgegeben.

Anhand dieser Information kann auf einfache Weise ermittelt werden, wo der Verschleiß bezogen auf die letzte Toleranzmessung am stärksten fortgeschritten ist.

Bei einer weiteren vorteilhaften Ausgestaltung werden die erste Toleranzmessung und die zweite Toleranzmessung mittels eines Kreisformtests durchgeführt, wobei ein durch den Kreisformtest beschriebener Kreis durch die erste Position und die zweite Position verläuft.

Bei dieser Ausgestaltung wird ein an sich bekannter Kreisformtest so positioniert, dass er einerseits durch die erste Position verläuft und andererseits durch die zweite Position verläuft. Dadurch kann der Kreisformtest anhand eines Durchlaufs sowohl die erste Toleranzmessung als auch die zweite Toleranzmessung durchführen. Nach Abschluss des Kreisformtests liegen dann eine Toleranzmessung für eine Position mit einem geringeren Belastungswert und eine weitere Toleranzmessung für eine weitere Positionsmessung mit einem höheren Belastungswert vor. Da in diesem Fall der Kreisformtest lediglich hinsichtlich seiner Parameter definiert werden muss, können die notwendigen Toleranzmessungen so auf einfache Weise durchgeführt werden.

Die Aufgabe wird außerdem gelöst durch eine entsprechende Vorrichtung zur Steuerung einer Werkzeugmaschine mit mehreren Arbeitsachsen, die Vorrichtung aufweisend
- eine Eingabeschnittstelle, die dafür ausgebildet ist, Positionsdaten aus einem Datenspeicher zu empfangen,
- eine Verarbeitungseinrichtung, die dafür ausgebildet ist, das zuvor beschriebene Verfahren nach einem der vorhergehenden Ansprüche auszuführen; und
- eine Ausgabeschnittstelle, die dafür ausgebildet ist die Information über den Verschleiß des Teils der Werkzeugmaschine auszugeben.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen.
- Fig. 1: eine Vorrichtung zur Steuerung einer Werkzeugmaschine;
- Fig. 2: ein Verfahren zur Steuerung einer Werkzeugmaschine; und
- Fig. 3: eine Ausführungsform einer Werkzeugmaschine.

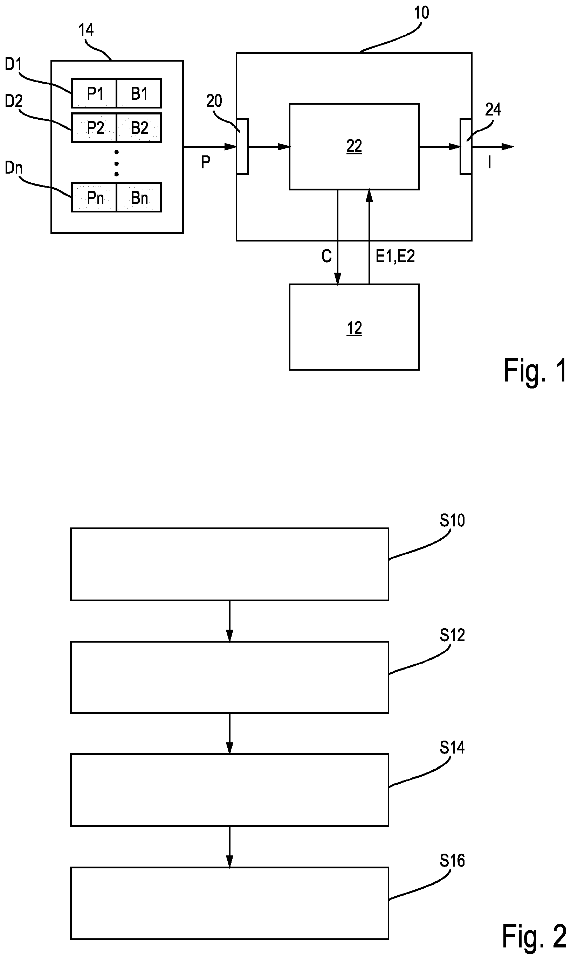

Fig. 1 zeigt eine Vorrichtung 10 zur Steuerung einer Werkzeugmaschine 12. Fig. 2 zeigt ein Verfahren zur Steuerung der Werkzeugmaschine 12. Das Verfahren und die Vorrichtung 10 werden nachfolgend genauer erläutert.

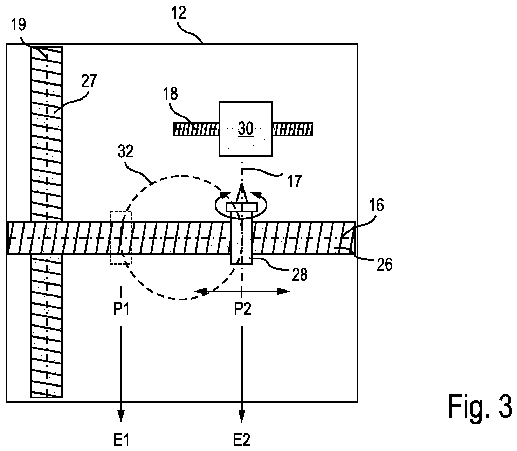

Fig. 2 zeigt einen Datenspeicher 14, der für mindestens eine spezifische Arbeitsachse 16, siehe Fig. 3, der mehreren Arbeitsachsen 16, 17, 18, 19, siehe Fig. 3, der Werkzeugmaschine 12 eine Vielzahl von Datentupeln D1, D2, ..., Dn enthält. Jedes der Datentupel D1, D2, ..., Dn ordnet einem Positionswert P1, P2, ..., Pn entlang der spezifischen Arbeitsachse 16 einen Belastungswert B1, B2, ...., Bn zu.

Die Vorrichtung 10 weist eine Eingabeschnittstelle 20 auf, die dafür ausgebildet ist, zumindest Positionsdaten P aus dem Datenspeicher 14 zu empfangen. Bei den Positionsdaten P handelt es sich zumindest teilweise um die zuvor genannten Positionswerte P1, P2, ..., Pn. Die Eingabeschnittstelle 20 kann alle Positionsdaten P aus dem Datenspeicher 14 empfangen. Bei bestimmten Ausführungsformen wird aber lediglich eine Teilmenge der Positionsdaten P empfangen, insbesondere, wie nachfolgend erläutert wird, zwei Positionswerte P1, P2. Bei einigen Ausgestaltungen kann die Eingabeschnittstelle 20 auch mindestens einen Belastungswert B1, mehrere Belastungswerte B1, B2, ...., Bn oder alle Belastungswerte B1, B2, ...., Bn empfangen.

Die Vorrichtung 10 weist ferner eine Verarbeitungseinrichtung 22 auf, die dafür ausgebildet ist, das Verfahren gemäß Fig. 2, nachfolgend noch erläutert, auszuführen. Die Vorrichtung 10 weist ferner eine Ausgabeschnittstelle 24 auf, die dafür ausgebildet ist, mindestens eine Information I über den Verschleiß eines Teils der Werkzeugmaschine 12 auszugeben.

Das Verfahren gemäß Fig. 2 dient der Steuerung einer Werkzeugmaschine 12 mit mehreren Arbeitsachsen 16, 17, 18, 19, die für eine Verlagerung eines Arbeitskopfs 28 und/oder eines Werkstücks 30 ausgebildet sind.

Zunächst wird der Datenspeicher 14 bereitgestellt, Schritt S10, der für die mindestens eine spezifische Arbeitsachse 16 der mehreren Arbeitsachsen 16, 17, 18, 19 eine Vielzahl von Datentupeln D1, D2, ..., Dn enthält, die jeweils einem Positionswert P1, P2, ..., Pn entlang der spezifischen Arbeitsachse 16 einen Belastungswert B1, B2, ..., Bn zuordnen.

In einem weiteren Schritt S12 werden aus der Vielzahl von Datentupeln D1, D2, ..., Dn ein erstes Datentupel D1, aufweisend einen ersten Positionswert P1 und einen ersten Belastungswert B1, und ein zweites Datentupel D2, aufweisend einen zweiten Positionswert P2 und einen zweiten Belastungswert B2, ausgewählt, wobei der erste Belastungswert B1 verschieden vom zweiten Belastungswert B2 ist.

Es wird dann mindestens ein Steuerbefehl C für die Werkzeugmaschine 12 erzeugt, Schritt S14, wobei der Steuerbefehl C dafür ausgebildet ist, eine erste Toleranzmessung an einer ersten Position beschrieben durch den ersten Positionswert P1 und eine zweite Toleranzmessung an einer zweiten Position beschrieben durch den zweiten Positionswert P2 durchzuführen.

Es wird in einem weiteren Schritt S16 dann auf Basis eines ersten Ergebnisses E1 der ersten Toleranzmessung und eines zweiten Ergebnisses E2 der zweiten Toleranzmessung eine Information I über einen Verschleiß eines Teils der Werkzeugmaschine 12 ausgegeben.

Fig. 3 zeigt eine Ausführungsform einer Werkzeugmaschine 12, in die ein Werkstück 30 eingespannt ist. Das Werkstück 30 kann entlang der Arbeitsachse 18 verlagert werden. Es ist ferner ein Arbeitskopf 28 gezeigt, der einerseits mittels der ersten Spindel 26 als auch mit der zweiten Spindel 27 verlagert werden kann. Die erste Spindel 26 hat die spezifische Arbeitsachse 16, und die zweite Spindel 27 hat eine Arbeitsachse 19. Der Arbeitskopf 28 hat zudem einen Arbeitseinsatz 32, der um eine Arbeitsachse 17 rotiert werden kann.

Es sind ferner symbolisch der erste Positionswert P1 und der zweite Positionswert P2 eingezeichnet, wobei die entsprechenden Toleranzmessungen an den entsprechenden Positionen zu den Ergebnissen E1 und E2 führen.

Bei einer Ausführungsform wird das erste Ergebnis E1 der ersten Toleranzmessung mit einem ersten früheren Ergebnis einer dritten Toleranzmessung an einer dritten Position, die mit der ersten Position übereinstimmt oder zur ersten Position naheliegt, verglichen, um eine erste Differenz zu erhalten, und das zweite Ergebnis E2 der zweiten Toleranzmessung wird mit einem zweiten früheren Ergebnis einer vierten Toleranzmessung an einer vierten Position, die mit der zweiten Position übereinstimmt oder zur zweiten Position naheliegt, verglichen, um eine zweite Differenz zu erhalten.

Ergibt sich eine ungefähre Übereinstimmung von erster und zweiter Differenz, wird bei dieser Ausführungsform die Information dahingehend ausgegeben, dass ein Verschleiß am Arbeitskopf 28 stattgefunden hat, der entlang der spezifischen Arbeitsachse 16 bewegbar ist. Bei einer signifikanten Abweichung von erster und zweiter Differenz wird die Information dahingehend ausgegeben, dass ein Verschleiß an der spezifischen Arbeitsachse 16 stattgefunden ist, die ortsinvariant bezogen zu sich selbst ist. Mit anderen Worten, die spezifische Arbeitsachse 16 verlagert sich nicht relativ zu sich selbst.

Bei einer Ausführungsform werden die erste Toleranzmessung und die zweite Toleranzmessung derart durchgeführt, dass ein Kreisformtest durchgeführt wird, deren Kreisbahn 32 sowohl durch die erste Position P1 als auch die zweite Position P2 verläuft, siehe den symbolisch angedeuteten Kreis, der die Verlagerung des Arbeitskopfs 28 andeutet.

Es wurden somit insgesamt ein Verfahren und eine Vorrichtung 10 aufgezeigt, die es ermöglichen, aus der Gesamtheit von verschleißbehafteten Teilen an einer Werkzeugmaschine 12, den aufgetretenen Verschleiß einer Teilgruppe dieser Bauteile zuzuordnen oder sogar auf ein konkretes Bauteil hinzuweisen.

## Patentansprüche

1. Verfahren zur Steuerung einer Werkzeugmaschine (12) mit mehreren Arbeitsachsen (16, 17, 18, 19), die für eine Verlagerung eines Arbeitskopfs (28) und/oder eines Werkstücks (30) ausgebildet sind, das Verfahren mit den Schritten:
- Bereitstellen (S10) eines Datenspeichers (14), der für mindestens eine spezifische Arbeitsachse (16) der mehreren Arbeitsachsen (16, 17, 18, 19) eine Vielzahl von Datentupeln (D1, D2, ..., Dn) enthält, die jeweils einem Positionswert (P1, P2, ..., Pn) bezogen auf die spezifische Arbeitsachse einen Belastungswert (B1, B2, ...., Bn) zuordnen,
- Wählen (S12), aus der Vielzahl von Datentupeln (D1, D2, ..., Dn), eines ersten Datentupels (D1) aufweisend einen ersten Positionswert (P1) und einen ersten Belastungswert (B1) und eines zweiten Datentupels (D2) aufweisend einen zweiten Positionswert (P2) und einen zweiten Belastungswert (B2), wobei der erste Positionswert (P1) verschieden vom zweiten Positionswert (P2) ist, und
- Erzeugen (S14) mindestens eines Steuerbefehls (C) für die Werkzeugmaschine (12), wobei der Steuerbefehl (C) dafür ausgebildet ist, eine erste Toleranzmessung an einer ersten Position beschrieben durch den ersten Positionswert (P1) und eine zweite Toleranzmessung an einer zweiten Position beschrieben durch den zweiten Positionswert (P2) durchzuführen, und
wobei auf Basis eines ersten Ergebnisses (E1) der ersten Toleranzmessung und eines zweiten Ergebnisses (E2) der zweiten Toleranzmessung eine Information (I) über einen Verschleiß eines Teils der Werkzeugmaschine ausgegeben wird (S16), wobei die erste und die zweite Toleranzmessung jeweils eine Abweichung zwischen einer vorgegebenen Sollposition von einer tatsächlichen Istposition ermitteln.

2. Verfahren nach Anspruch 1, wobei bei einer ungefähren Übereinstimmung von erstem und zweitem Ergebnis (E1, E2) die Information ausgegeben wird, dass ein Verschleiß an einem ersten Bauteil stattgefunden hat, das der spezifischen Arbeitsachse (16) zugeordnet ist und relativ zu der spezifischen Arbeitsachse (16) bewegbar ist.

3. Verfahren nach einem der vorhergehenden Ansprüche, wobei bei einer signifikanten Abweichung zwischen erstem und zweitem Ergebnis (E1, E2) die Information ausgegeben wird, dass ein Verschleiß an einem zweiten Bauteil stattgefunden hat, das der spezifischen Arbeitsachse (16) zugeordnet ist und ortsinvariant relativ zu der spezifischen Arbeitsachse (16) ist.

4. Verfahren nach einem der vorhergehenden Ansprüche, wobei das erste und das zweite Datentupel (D1, D2) so ausgewählt werden, dass der erste Belastungswert (B1) deutlich kleiner als der zweite Belastungswert (B2) ist.

5. Verfahren nach einem der vorhergehenden Ansprüche, wobei das erste und das zweite Datentupel (D1, D2) so ausgewählt werden, dass der erste Belastungswert (B1) ein kleinster Belastungswert aus der Vielzahl von Datentupeln (D1, D2, ..., Dn) der spezifischen Arbeitsachse (16) ist und/oder der zweite Belastungswert (B2) ein größter Belastungswert aus der Vielzahl von Datentupeln (D1, D2, ..., Dn) der spezifischen Arbeitsachse (16) ist.

6. Verfahren nach einem der vorhergehenden Ansprüche, wobei das erste Ergebnis (E1) der ersten Toleranzmessung mit einem ersten früheren Ergebnis einer dritten Toleranzmessung an einer dritten Position, die mit der ersten Position übereinstimmt oder zur ersten Position naheliegt, verglichen wird, um eine erste Differenz zu erhalten, und das zweite Ergebnis (E2) der zweiten Toleranzmessung mit einem zweiten früheren Ergebnis einer vierten Toleranzmessung an einer vierten Position, die mit der zweiten Position übereinstimmt oder zur zweiten Position naheliegt, verglichen wird, um eine zweite Differenz zu erhalten.

7. Verfahren nach Anspruch 6, wobei bei einer ungefähren Übereinstimmung von erster und zweiter Differenz die Information ausgegeben wird, dass ein Verschleiß an einem ersten Bauteil stattgefunden hat, das der spezifischen Arbeitsachse zugeordnet ist und relativ zu der spezifischen Arbeitsachse (16) bewegbar ist.

8. Verfahren nach Anspruch 6 oder 7, wobei bei einer signifikanten Abweichung von erster und zweiter Differenz die Information ausgegeben wird, dass ein Verschleiß an einem zweiten Bauteil stattgefunden hat, das der spezifischen Arbeitsachse (16) zugeordnet ist und ortsinvariant relativ zu der spezifischen Arbeitsachse (16) ist.

9. Verfahren nach Anspruch 8, wobei die maximale Differenz von erster Differenz und zweiter Differenz ermittelt wird und der der maximalen Differenz zugeordnete Positionswert als dritte Information ausgegeben wird.

10. Verfahren nach einem der vorhergehenden Ansprüche, wobei die erste Toleranzmessung und die zweite Toleranzmessung mittels eines Kreisformtests durchgeführt werden, wobei ein durch den Kreisformtest beschriebener Kreis durch die erste Position und die zweite Position verläuft.

11. Vorrichtung (10) zur Steuerung einer Werkzeugmaschine (12) mit mehreren Arbeitsachsen (16, 17, 18, 19), die Vorrichtung (10) aufweisend
- eine Eingabeschnittstelle (20), die dafür ausgebildet ist, Positionsdaten (P) aus einem Datenspeicher (14) zu empfangen,
- eine Verarbeitungseinrichtung (22), die dafür ausgebildet ist, das Verfahren nach einem der vorhergehenden Ansprüche auszuführen; und
- eine Ausgabeschnittstelle (24), die dafür ausgebildet ist die Information (I) über den Verschleiß des Teils der Werkzeugmaschine (12) auszugeben.

## Claims

1. Method for controlling a machine tool (12) having a plurality of working axes (16, 17, 18, 19) which are configured for displacement of at least one of working head (28) and a workpiece (30), the method comprising the steps of:
- providing (S10) a data memory (14) containing, for at least one specific working axis (16) of the plurality of working axes (16, 17, 18, 19), a plurality of data tuples (D1, D2, ..., Dn) which each assign a load value (B1, B2, ...., Bn) to a position value (P1, P2, ..., Pn) relative to the specific working axis,
- selecting (S12), from the plurality of data tuples (D1, D2, ..., Dn), a first data tuple (D1) having a first position value (P1) and a first load value (B1) and a second data tuple (D2) having a second position value (P2) and a second load value (B2), the first position value (P1) being different from the second position value (P2), and
- generating (S14) at least one control command (C) for the machine tool (12), the control command (C) being adapted to perform a first tolerance measurement at a first position described by the first position value (P1) and a second tolerance measurement at a second position described by the second position value (P2), and
wherein on the basis of a first result (E1) of the first tolerance measurement and a second result (E2) of the second tolerance measurement, information (I) about wear of a part of the machine tool is output (S16), wherein each of the first and the second tolerance measurement determine a deviation between a specified target position and an actual position.

2. The method according to any preceding claim, wherein based on an approximate match of first and second results (E1, E2) information is output that wear has occurred on a first component which is associated with the specific working axis (16) and which is movable relative to the specific working axis (16).

3. The method according to any preceding claim, wherein in case of a significant deviation between first and second results (E1, E2) information is output that wear has occurred on a second component which is associated with the specific working axis (16) and which is location-invariant relative to the specific working axis (16).

4. The method according to any preceding claim, wherein the first and second data tuples (D1, D2) are selected such that the first load value (B1) is substantially less than the second load value (B2).

5. The method according to any preceding claim, wherein the first and second data tuples (D1, D2) are selected such at least of the following conditions is fulfilled: a) the first loading value (B1) is a smallest loading value among the plurality of data tuples (D1, D2, ..., Dn) of the specific working axis (16), and b) the second loading value (B2) is a largest loading value among the plurality of data tuples (D1, D2, ..., Dn) of the specific working axis (16).

6. The method according to any preceding claim, wherein the first result (E1) of the first tolerance measurement is compared with a first previous result of a third tolerance measurement at a third position coinciding with or close to the first position to obtain a first difference, and the second result (E2) of the second tolerance measurement is compared with a second previous result of a fourth tolerance measurement at a fourth position coinciding with or close to the second position to obtain a second difference.

7. The method according to claim 6, wherein an approximate match of first and second differences provides information that wear has occurred on a first component associated with the specific working axis and movable relative to the specific working axis (16).

8. The method according to claim 6 or 7, wherein in case of a significant deviation of first and second difference, the information is output that wear has occurred on a second component which is associated with the specific working axis (16) and is location-invariant relative to the specific working axis (16).

9. The method according to claim 8, wherein the maximum difference between the first difference and the second difference is determined and the position value assigned to the maximum difference is output as third information.

10. The method according to any preceding claim, wherein the first tolerance measurement and the second tolerance measurement are performed by means of a circularity test, wherein a circle described by the circularity test passes through the first position and the second position.

11. A device (10) for controlling a machine tool (12) with a plurality of working axes (16, 17, 18, 19), the device (10) comprising:
- an input interface (20) adapted to receive position data (P) from a data memory (14),
- processing means (22) adapted to perform the method in accordance with any preceding claim; and
- an output interface (24) adapted to output the information (I) about the wear of the part of the machine tool (12).

## Revendications

1. Procédé de commande d'une machine-outil (12) comprenant plusieurs axes de travail (16, 17, 18, 19) qui sont configurés pour un déplacement d'une tête de travail (28) et/ou d'une pièce ouvrée (30), le procédé comprenant les étapes suivantes :
- mise à disposition (S10) d'une mémoire de données (14) qui, pour au moins un axe de travail (16) spécifique des plusieurs axes de travail (16, 17, 18, 19), contient une pluralité de tuples de données (D1, D2, ..., Dn) qui associent respectivement une valeur de charge (B1, B2, ..., Bn) à une valeur de position (P1, P2, ..., Pn) en référence à l'axe de travail spécifique,
- sélection (S12), parmi la pluralité de tuples de données (D1, D2, ..., Dn), d'un premier tuple de données (D1) possédant une première valeur de position (P1) et une première valeur de charge (B1) et d'un deuxième tuple de données (D2) possédant une deuxième valeur de position (P2) et une deuxième valeur de charge (B2), la première valeur de position (P1) étant différente de la deuxième valeur de position (P2), et
- génération (S14) d'au moins une instruction de commande (C) pour la machine-outil (12), l'instruction de commande (C) étant configurée pour effectuer une première mesure de tolérance au niveau d'une première position décrite par la première valeur de position (P1) et une deuxième mesure de tolérance au niveau d'une deuxième position décrite par la deuxième valeur de position (P2), et
une information (I) à propos d'une usure d'une partie de la machine-outil étant délivrée (S16) sur la base d'un premier résultat (E1) de la première mesure de tolérance et d'un deuxième résultat (E2) de la deuxième mesure de tolérance, la première et la deuxième mesure de tolérance déterminant respectivement un écart entre une position de consigne prédéfinie et une position réelle effective.

2. Procédé selon la revendication 1, selon lequel, dans le cas d'une concordance approximative entre le premier et le deuxième résultat (E1, E2), l'information est délivrée selon laquelle une usure s'est produite au niveau d'un premier élément structural, qui est associé à l'axe de travail spécifique (16) et qui peut être déplacé par rapport à l'axe de travail spécifique (16).

3. Procédé selon l'une des revendications précédentes, selon lequel, dans le cas d'un écart important entre le premier et le deuxième résultat (E1, E2), l'information est délivrée selon laquelle une usure s'est produite au niveau d'un deuxième élément structural, qui est associé à l'axe de travail spécifique (16) et dont l'emplacement est fixe par rapport à l'axe de travail spécifique (16).

4. Procédé selon l'une des revendications précédentes, le premier et le deuxième tuple de données (D1, D2) étant choisis de telle sorte que la première valeur de charge (B1) est nettement inférieure à la deuxième valeur de charge (B2).

5. Procédé selon l'une des revendications précédentes, le premier et le deuxième tuple de données (D1, D2) étant choisis de telle sorte que la première valeur de charge (B1) est une valeur de charge la plus petite parmi la pluralité de tuples de données (D1, D2, ..., Dn) de l'axe de travail spécifique (16) et/ou la deuxième valeur de charge (B2) est une valeur de charge la plus grande parmi la pluralité de tuples de données (D1, D2, ..., Dn) de l'axe de travail spécifique (16).

6. Procédé selon l'une des revendications précédentes, le premier résultat (E1) de la première mesure de tolérance étant comparé à un premier résultat antérieur d'une troisième mesure de tolérance au niveau d'une troisième position, laquelle coïncide avec la première position ou est proche de la première position, afin d'obtenir une première différence, et le deuxième résultat (E2) de la deuxième mesure de tolérance étant comparé à un deuxième résultat antérieur d'une quatrième mesure de tolérance au niveau d'une quatrième position, laquelle coïncide avec la deuxième position ou est proche de la deuxième position, afin d'obtenir une deuxième différence.

7. Procédé selon la revendication 6, selon lequel, dans le cas d'une concordance approximative de la première et de la deuxième différence, l'information est délivrée selon laquelle une usure s'est produite au niveau d'un premier élément structural, qui est associé à l'axe de travail spécifique et qui peut être déplacé par rapport à l'axe de travail spécifique (16).

8. Procédé selon la revendication 6 ou 7, selon lequel, dans le cas d'un écart important entre la première et la deuxième différence, l'information est délivrée selon laquelle une usure s'est produite au niveau d'un deuxième élément structural, qui est associé à l'axe de travail spécifique (16) et dont l'emplacement est fixe par rapport à l'axe de travail spécifique (16).

9. Procédé selon la revendication 8, la différence maximale parmi la première différence et la deuxième différence étant déterminée et la valeur de position associée à la différence maximale étant délivrée en tant que troisième information.

10. Procédé selon l'une des revendications précédentes, la première mesure de tolérance et la deuxième mesure de tolérance étant réalisées au moyen d'un essai en forme de cercle, un cercle décrit par l'essai en forme de cercle passant par la première position et la deuxième position.

11. Arrangement (10) pour commander une machine-outil (12) comprenant plusieurs axes de travail (16, 17, 18, 19), l'arrangement (10) comportant
- une interface de saisie (20) qui est configurée pour recevoir des données de position (P) en provenance d'une mémoire de données (14),
- un dispositif de traitement (22) qui est configuré pour mettre en œuvre le procédé selon l'une des revendications précédentes ; et
- une interface de sortie (24) qui est configurée pour délivrer en sortie l'information (I) à propos de l'usure de la partie de la machine-outil (12).
